# EUROPÄISCHE PATENTANMELDUNG

(11) **EP 0 524 536 A2**
(43) Veröffentlichungstag der Anmeldung: **27.01.1993**
(21) Anmeldenummer: 92112038.2
(22) Anmeldetag: 15.07.1992
(51) Int. Cl.: G11B 5/86

(54) **Verfahren und Vorrichtung zum Kontaktkopieren magnetischer Aufzeichnungen auf Magnetbändern**

(30) Priorität: 22.07.1991 DE 4124254
(71) Anmelder: BASF Aktiengesellschaft, D-67063 Ludwigshafen (DE)
(72) Erfinder: Rothfuss, Edwin, W-7609 Hohberg (DE); Knopf, Franz, W-7600 Offenburg (DE)

(57) **Zusammenfassung**

Zur Herstellung eines innigen Kontaktes der Magnetschichtseiten eines Masterbandes (4) und eines Magnetbandes (5) in der Kopierzone (3) mittels elektrostatischer Kräfte werden auf die Magnetschichtseiten mittels Hochspannungseinrichtungen (14, 15, 17) elektrostatische Ladungen entgegengesetzter Polarität aufgebracht.

## Beschreibung

Die Erfindung betrifft ein Verfahren zum Kontaktkopieren mganetischer Aufzeichnungen auf Magnetbändern, bei dem ein Masterband und ein Magnetband, auf das die Aufzeichnungen übertragen werden sollen, während eines Umspulvorgangs der beiden Bänder mit den Magnetschichtseiten in innigen Kontakt gebracht werden. Ferner betrifft die Erfindung eine Vorrichtung zur Durchführung des Verfahrens, bestehend aus einer Kopierzone in einem Kontaktspalt, gebildet durch eine Kontaktrolle und einen deren Oberfläche dicht benachbarten Führungsschuh, und aus der Kontaktrolle vor- und nachgeordneten Zuführungs- bzw. Ausführungsrollen und Umlenkrollen.

Eine der besonders kritischen Größen beim Kontaktkopieren magnetischer Aufzeichnungen ist das Aufrechterhalten des optimalen Magnetschichtkontaktes zwischen dem Masterband und dem Magnetband, auf welches die Information kopiert werden soll. Aufgrund der physikalischen Gesetzmäßigkeiten des magnetischen Kopierprozesses führen schon Abstände zwischen den Magnetschichten von viel kleiner als 1 µm zu starker Beeinträchtigung der Kopierqualität. Bei der bisher üblichen Kopiertechnik wird sowohl beim Kopieren mittels Hochfrequenzfeld als auch beim Kopieren mittels Laserstrahl der erforderliche Bandkontakt über den Einsatz eines Hochdruckluftstrahles in Verbindung mit speziell geformten Düsen hergestellt. Diese Verfahren arbeiten abhängig von der Bandoberflächenstruktur nicht in allen Fällen zuverlässig. Mikroaufnahmen beweisen, daß lokale Lufteinschlüsse den Bandkontakt punktuell verhindern. Dies führt zur Störung der kopierten Information. Es ist auch schon versucht worden, über zusätzliche Luftdüsen die Situation zu verbessern, aber auch dieses Verfahren führte zu keiner nennenswerten Verbesserung.

Dementsprechend liegt vorliegender Erfindung die Aufgabe zugrunde, ein Verfahren und eine Vorrichtung zum Kontaktkopieren magnetischer Aufzeichnungen auf Magnetbändern zu schaffen, durch die der Kontakt zwischen den am Kopiervorgang beteiligten Magnetschichten gegenüber den bisher üblichen Kopiertechniken verbessert werden kann.

Die Aufgabe wurde durch ein Verfahren der eingangs geschilderten Art gelöst, bei dem erfindungsgemäß zur Herstellung des Kontaktes mittels elektrostatischer Feldkräfte auf die Oberflächen der am Kopiervorgang beteiligten Magnetschichten elektrostatische Ladungen entgegengesetzter Polarität aufgebracht werden.

Die auf den vorrichtungsgemäßen Teil der Aufgabe sich beziehende Lösung besteht darin, daß bei der eingangs geschilderten Vorrichtung den Magnetschichtseiten des Masterbandes und Magnetbandes in deren Zuführungsbereich elektrostatische Ladungen übertragende Einrichtungen zugeordnete sind, die an Hochspannungsquellen entgegengesetzter Polarität angeschlossen sind, und im Ausführungsbereich der Bänder ein Wechselspannungsionisator angeordnet ist.

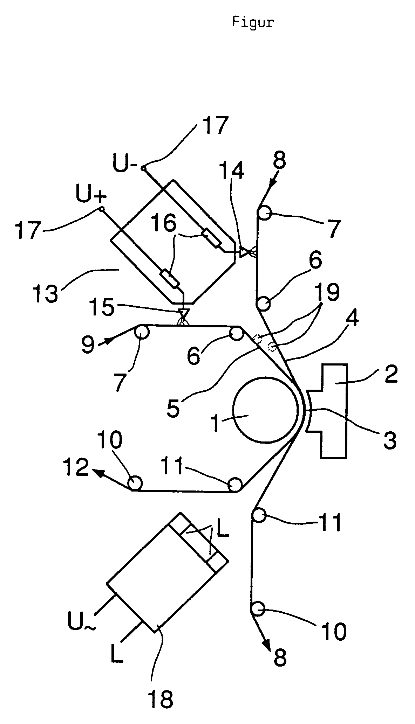

Das Verfahren und die Vorrichtung nach der Erfindung sind anhand eines in der Zeichnung schematisch dargestellten Ausführungsbeispiels nachfolgend näher beschrieben.

Ausgehend von der Arbeitshypothese, daß elektrostatische Wechselwirkungen beim Kopiervorgang für den Schichtkontakt eine wichtige Rolle spielen und aus der Feststellung, daß sich mit Magnetschichten verschiedener elektrischer Leitfähigkeit unterschiedliches Kopierverhalten erzielen läßt, beruht die Lösung des Problems in der gezielten Aufbringung elektrostatischer Ladungen auf die Oberflächen der am Kopiervorgang beteiligten Magnetschichten.

Hierfür ist eine Vorrichtung vorgesehen, deren zentrales Teil aus einer Kontaktrolle 1 und einem deren Oberfläche dicht benachbarten Führungsschuh 2 besteht. Zwischen diesen ist ein Kontaktspalt 3 einer Breite von 80 µm bis 100 µm gebildet, in dem sich die Kopierzone befindet. Das Masterband 4 und das Magnetband 5, auf das die Aufzeichnungen übertragen werden sollen, werden mit zueinander gekehrten Magnetschichtseiten über Umlenkrollen 6 und Zuführungsrollen 7 von einem Bandvorrat 8 und 9 in den Kontaktspalt 3 geführt und mittels Ausführungsrollen 10 und Umlenkrollen 11 von diesem wieder weggeführt, das Masterband 4 wieder in die Vorratsschleife 8 und das Magnetband 5 zu einer Aufwickelspule 12.

Zur Herstellung eines innigen und homogenen Kontaktes der Magnetschichtseiten der beiden Bänder im Kontaktspalt 3 mittels elektrostatischer Feldkräfte ist im Zuführungsbereich der Bänder 4, 5 eine Einrichtung 13 zur Übertragung elektrischer Ladungen auf die Magnetschichtseiten angeordnet. Sie besteht aus zwei den beiden Magnetschichtseiten zugewendeten Spitzenelektroden 14 und 15, die zur Vermeidung energiereicher Entladungen über hochohmige Widerstände 16 (ca. 50 MOhm) an Hochspannungsquellen 17 entgegengesetzter Polarität angeschlossen sind. Die Hochspannung beträgt für beide Polaritäten ca. 20 kV. Der Abstand der Spitzenelektroden zu den Bandoberflächen ist vorzugsweise gleich der Breite der Bänder, um eine möglichst homogene Ladungsverteilung zu erreichen.

Die aufgeladenen Bänder werden im Kontaktspalt 3 zusammengeführt. Die entgegengesetzte Polarität ihrer Oberflächenladungen bewirkt ausreichende elektrostatische Anziehungskräfte, welche bis in die Molekülstruktur des Bandes wirksam sind. Lufteinschlüsse werden aus demselben Grund eliminiert; die Luft entweicht dabei über die Bandkanten.

Damit die nach dem Kopiervorgang noch aufgeladenen Bänder problemlos weiterverarbeitet werden können, ist im Ausführungsbereich der Bänder ein Wechselspannungsioniosator 18 angeordnet, dessen in einem Luftstrom L vorhandenen positiven und negativen Ionen die Oberflächenladungen der Bänder abführen. Derartige Geräte stehen im Fachhandel zur Verfügung, so daß auf eine nähere Beschreibung verzichtet werden kann.

Anstelle der Übertragung der elektrischen Ladungen auf die Bänder durch die Hochspannungsfelder einer Spitzenelektrode kann diese auch mittels isoliert gelagerter Führungsrollen 19 vorgenommen werden, die an die Hochspannungsquellen 17 angeschlossen sind und über die das Masterband 4 und das Magnetband 5 mit ihren Magnetschichtseiten laufen.

## Patentansprüche

1. Verfahren zum Kontaktkopieren magnetischer Aufzeichnungen auf Magnetbändern, bei dem ein Masterband und ein Magnetband, auf das die Aufzeichnungen übertragen werden sollen, während eines Umspulvorgangs der beiden Bänder mit den Magnetschichtseiten in innigen Kontakt gebracht werden, dadurch gekennzeichnet, daß zur Herstellung des Kontaktes mittels elektrostatischer Feldkräfte auf die Oberflächen der am Kopiervorgang beteiligten Magnetschichten elektrostatische Ladungen entgegengesetzter Polarität aufgebracht werden.

2. Vorrichtung zur Durchführung des Verfahrens nach Anspruch 1, bestehend aus einer Kopierzone in einem Kontaktspalt (3), gebildet durch eine Kontaktrolle (1) und einen deren Oberfläche dicht benachbarten Führungsschuh (2), und aus der Kontaktrolle vor- und nachgeordneten Zuführungs(7)- bzw. Ausführungsrollen (10) und Umlenkrollen (6, 11), dadurch gekennzeichnet, daß den Magnetschichtseiten des Masterbandes (4) und Magnetbandes (5) in deren Zuführungsbereich elektrostatische Ladungen übertragende Einrichtungen zugeordnet sind, die an Hochspannungsquellen (17) entgegengesetzter Polarität angeschlossen sind, und im Ausführungsbereich der Bänder ein Wechselspannungsionisator (18) angeordnet ist.

3. Vorrichtung nach Anspruch 2, dadurch gekennzeichnet, daß die elektrostatische Ladungen übertragenden Einrichtungen aus den Magnetschichtseiten des Masterbandes (4) und Magnetbandes (5) benachbarten Spitzenelektroden (14, 15) bestehen.

4. Vorrichtung nach Anspruch 2, dadurch gekennzeichnet, daß die elektrostatische Ladungen übertragenden Einrichtungen aus isoliert gelagerten Führungsrollen (19) bestehen, die an die Hochspannungsquellen (17) angeschlossen sind und über die das Masterband (4) und das Magnetband (5) mit ihren Magentschichtseiten laufen.
